Europäisches Patentamt

European Patent Office

Office européen des brevets

(11) Numéro de publication: **0 376 362**
**A1**

# (12) DEMANDE DE BREVET EUROPEEN

(21) Numéro de dépôt: 89202966.1

(22) Date de dépôt: 22.11.89

(51) Int. Cl.⁵: **B23H 7/10, B23H 7/26**

(30) Priorité: 22.11.88 CH 4325/88

(43) Date de publication de la demande:
04.07.90 Bulletin 90/27

(84) Etats contractants désignés:
DE FR GB

(71) Demandeur: CHARMILLES TECHNOLOGIES S.A.
8-10, rue du Pré-de-la-Fontaine Zone industrielle de Satigny
CH-1217 Meyrin 1(CH)

(72) Inventeur: Josserand, Joseph
Route du Suet
F-74350 Cruseilles(FR)
Inventeur: Girardin, Roger
8, chem. de l'Echarpine
CH-1214 Vernier(CH)
Inventeur: Ruffin, Jean-André
La Bergue
F-74380 Bonne(FR)

(74) Mandataire: Hugelin, Christiane
c/o CHARMILLES TECHNOLOGIES SA Case postale 373
CH-1217 Meyrin 1(CH)

(54) Dispositif de protection pour têtes d'usinage.

(57) Une tête d'usinage comporte à son extrémité un capteur comportant un organe (4) sensible à la pression monté sur les éléments (1, 2) supportant la buse d'injection de liquide d'usinage, ainsi que des éléments tampon (5, 6, 12) formant un bouclier. Cet organe (4) est un tube isolant et étanche, disposé en formant un anneau dans l'espace ménagé entre les deux surfaces coaxiales et tronconiques des éléments (1 et 2). Il contient des éléments conducteurs entrant en contact lorsqu'il est déformé sous l'action d'une pression d'intensité supérieure à un seuil donné. Ceci à pour conséquence la fermeture d'un circuit émettant un signal approprié vers la commande de la machine EDM afin d'interrompre le mouvement relatif de la tête. Ce dispositif permet de déceler un choc ou une sollicitation anormale sur l'extrémité de la tête d'usinage. Grâce au joint O-ring constituant la charnière (7), les pièces (1) et (12) sont rappelées en position originale lorsque cette sollicitation a disparu. De plus, ce joint (7) permet une surcourse.

FIG.1

# DISPOSITIF DE PROTECTION POUR TETES D'USINAGE

La présente invention a trait à un dispositif de protection empêchant qu'une tête d'usinage ne soit sollicitée par une contrainte supérieure à un seuil donné, suite à une collision ou à une pression trop importante.

En effet, les têtes d'usinage, en particulier celles d'une machine de découpage par électroérosion, contiennent des organes fragiles (guides-fil, contacts amenant le courant d'usinage au fil-électrode); dans certains cas, la tête supérieure est montée sur un mécanisme permettant de la déplacer dans un plan horizontal de manière à décaler la position du guide-fil supérieur relativement à celle du guide-fil inférieur, et donc d'incliner le fil-électrode. Il s'agit en général d'une table à mouvements croisés particulièrement fragile. Ces divers organes conditionnent le degré de précision de l'usinage réalisé. Or, un choc ou une sollicitation trop importante sur l'extrémité de ces têtes d'usinage peuvent endommager ou fausser ces organes, en particulier la table à mouvements croisés.

Il est maintenant possible de programmer les divers mouvements relatifs entre les têtes d'usinage, en particulier la tête d'usinage supérieure, la pièce à usiner et les organes qui la maintiennent, ainsi que les autres mécanismes pouvant être présents dans le bac d'usinage, de manière à éviter les collisions. Mais ces mouvements sont très complexes. Ainsi, dans l'exemple choisi ici pour décrire le fonctionnement du dispositif de la présente invention, la tête d'usinage supérieure peut se déplacer verticalement par rapport à la pièce à usiner grâce à une première commande (axe Z); elle peut également se déplacer horizontalement, selon deux axes orthogonaux (axes U et V); la tête inférieure est fixe. La pièce à usiner est montée en position fixe sur un mécanisme (table à mouvements croisés) permettant de la déplacer horizontalement selon deux axes orthogonaux (axes X et Y). La commande de ces divers mouvements doit souvent permettre la découpe de trajectoires compliquées, avec des vitesses d'avance et des angles de dépouille variant constamment, dans des pièces dont les surfaces en regard des têtes d'usinages ne sont pas horizontales. Les erreurs de programmation ont d'autant plus souvent pour conséquence la collision de l'une des têtes avec l'un des organes présents autour de la zone d'usinage, que les têtes d'usinages sont maintenues le plus près possible de la pièce à usiner (afin d'obtenir une injection efficace de liquide d'usinage dans la fente d'usinage) et que les vitesses d'usinage sont de plus en plus élevées.

Il était donc important de protéger les têtes d'usinage en cas de choc ou de pression exercée par un obstacle non prévu par la programmation et se trouvant sur leur trajectoire, en décelant rapidement cet événement et en agissant aussitôt sur les commandes de la machine afin d'en modifier le fonctionnement pour supprimer le plus rapidement possible la contrainte exercée sur la tête, soit en arrêtant le mouvement de la tête, soit même en actionnant un mouvement inverse ou de recul.

Il était connu d'arrêter, grâce à un dispositif anti-collision, le mouvement de la tête d'usinage lorsque la distance la séparant d'un obstacle placé sur sa trajectoire devient inférieure à un seuil prédéterminé. Ainsi un dispositif de ce type, comportant un détecteur de proximité aux ultrasons, est décrit dans la demande de brevet japonaise 62-152.640. La DOS 37 23 250 décrit un dispositif anti-collision permettant de maintenir sur une machine d'électroérosion à fil une distance supérieure à un seuil donné entre les organes bridant la pièce à usiner et le fil-électrode. Il comporte une excroissance placée sur la tête inférieure, agencée de manière à venir buter contre un élément élastique, situé en regard de cette excroissance, sur le support de la pièce à usiner, et apte à se déformer lorsque cette excroissance vient buter contre lui; cette déformation provoque l'arrêt du mouvement relatif entre la pièce et le fil-électrode.

Signalons également le dispositif de sécurité décrit dans la demande de brevet japonaise 62-63020, destiné à arrêter l'usinage sur une machine d'enfonçage par électroérosion afin d'éviter que les électrodes ne soient endommagées en étant appuyées trop fortement l'une contre l'autre dans le cas d'un mauvais fonctionnement du dispositif contrôlant l'avance de l'outil dans la pièce. Il s'agit d'une jauge de contrainte montée dans le porte-outil et reliée à un circuit agencé de manière à arrêter l'avance de l'outil lorsque l'effort exercé sur l'outil est supérieur à un seuil donné.

On connait également des buses d'injection de liquide d'usinage, montées à l'extrémité des têtes, afin d'irriguer la fente d'usinage, et construites de manière à amortir les chocs ou à suivre de faibles irrégularités de la pièce (brevet US 4 675 492) à se rétracter en cas de choc frontal, à basculer afin d'enjamber un obstacle (EP 271 439).

Mais aucune de ces réalisations ne permettait de protéger les têtes d'usinage de type existant, sans devoir remplacer les buses d'injection par des buses de type nouveau. Ce remplacement avait en général pour conséquence la variation des distances séparant les divers organes disposés le long du trajet du fil-électrode, et ceci entraînait des modifications de construction importantes, en particulier des systèmes d'enfilage et de réenfilage automatique du fil.

De plus, chacune de ces réalisations ne permettait de pallier que les collisions avec un certain type d'obstacle.

Le but de la présente invention est de proposer un dispositif protégeant les têtes d'usinages, en particulier celles d'une machine d'électroérosion à fil, suite à une collision avec n'importe quel obstacle et pouvant être monté sur les têtes d'usinage des machines existantes sans avoir à modifier de façon importante la construction des organes montés à leur extrémité, en particulier en conservant les distances séparant les divers organes disposés le long du trajet du fil-électrode.

L'objet de la présente invention est un dispositif de protection pour têtes d'usinages permettant de déceler un choc ou une sollicitation anormale sur l'extrémité d'une tête d'usinage et d'interrompre le mouvement relatif entre cette tête et l'obstacle, constitué par un capteur monté sur un organe placé à l'extrémité de cette tête et agencé pour détecter l'application sur cette extrémité d'une force de pression d'intensité supérieure à une valeur de référence prédéterminée, quelle que soit l'orientation de cette force et son point d'application, et pour envoyer un signal aux commandes de la machine afin d'interrompre le mouvement relatif entre cette tête et l'obstacle et afin de ramener l'intensité de la force de pression en dessous de cette valeur de référence ou même de supprimer cette force.

Dans le cas d'une tête d'usinage de machine d'électroérosion à fil, l'organe sur lequel est monté le capteur est une buse d'injection de liquide d'usinage dont la fonction est d'irriguer la fente découpée dans la pièce.

Selon la méthode de programmation de la commande numérique recevant le signal émis par le capteur, en général ce signal actionne aussi la commande du retrait de l'électrode-fil sur une petite portion (de longueur prédéterminée) de la fente découpée dans la pièce. Il peut également actionner l'arrêt de l'usinage.

Ce signal peut aussi actionner un avertisseur sonore ou optique, par exemple, alertant l'opérateur.

Afin de renforcer cette protection et d'amplifier l'efficacité du capteur, le dispositif de la présente invention peut présenter aussi un bouclier ou un tampon recouvrant la tête en regard de la pièce à usiner et se relevant en oblique sur les parois de cette tête. Un évidement correspondant à l'orifice de sortie de la buse et au passage du fil est évidemment ménagé dans ce tampon, lorsqu'il s'agit d'électroérosion à fil.

Un tel dispositif permet de protéger la tête d'usinage supérieure d'une machine d'électroérosion à fil de chocs contre les brides de fixation de la pièce ou les protubérances de cette pièce, par exemple. Il peut aussi servir à détecter la chute sur la tête d'usinage inférieure des parties qui ont été évidées dans la pièce, ou le choc de cette tête inférieure sur les supports qui maintiennent la pièce en position fixe dans le bac de travail et sont solidaires de ce dernier; ces supports se déplacent en effet horizontalement avec le bac relativement à la tête inférieure et peuvent donc venir la heurter.

N'importe quel type de capteur peut être utilisé dans ce dispositif de protection, pour autant qu'il supporte sans dommages les vibrations et les mouvements parfois relativement brusques de la tête d'usinage. L'usinage étant souvent réalisé en immersion, la tête inférieure et la pièce à usiner ainsi que l'extrêmité de la tête supérieure sont en général immergées dans le liquide d'usinage, constitué la plupart du temps par de l'eau et/ou un hydrocarbure. Le dispositif de protection doit donc être étanche. Ce capteur devra aussi résister au champ électrique régnant souvent au voisinage de la zone d'usinage et aux variations de la température en cours d'usinage. Il ne peut s'agir d'un capteur optique, car le liquide d'usinage manque en général de limpidité.

Dans la plupart des modes de réalisation de la présente invention, le capteur sera un élément sensible à la pression, étanche et monté dans un circuit électrique lui permettant de transmettre des signaux à une commande de la machine et, éventuellement, à un avertisseur. Il sera par exemple enfermé dans une enceinte également constituée de préférence par une matière isolante électriquement, afin d'éviter que la tête d'usinage ne porte une trop forte charge électrique, en cas de rupture du fil-électrode par exemple, ce dernier pouvant venir alors au contact de l'extrémité inférieure de la tête d'usinage et donc du capteur.

Le capteur ne devra pas être trop sensible en réagissant, par exemple, à la simple proximité d'un obstacle. En effet, la buse d'injection dans laquelle est monté le capteur est, lors de la plupart des usinages, placée à quelques dixièmes de millimètres de la pièce à usiner. La sensibilité sera satisfaisante s'il réagit à un choc ou une force de pression de l'ordre de 0,1 kg environ.

Enfin, comme déjà indiqué ci-dessus, ce capteur devra être multidirectionnel, c'est-à-dire qu'il devra détecter l'application d'une sollicitation quelle que soit la direction de cette dernière. Il devra aussi détecter le contact avec un obstacle quel que soit le point de ce contact sur la face inférieure de la tête d'usinage ou sur une certaine hauteur de parois au voisinage de cette face inférieure.

Le dispositif de la présente invention peut présenter une infinité de formes d'exécution. Seules certaines des variantes possibles seront illustrées schématiquement, et à titre d'exemple, par le dessin annexé :

- la figure 1 représente une coupe d'une tête d'usinage comportant un dispositif selon l'une des formes d'exécution de l'invention monté dans la buse d'injection placée à l'extrémité inférieure de cette tête.

- La figure 2 représente la coupe d'une tête d'usinage munie d'un dispositif de protection comportant un bouclier, selon une autre forme d'exécution de l'invention.

- La figure 3 illustre une des nombreuses variantes possibles pour la forme du capteur utilisable dans le dispositif de protection de la présente invention.

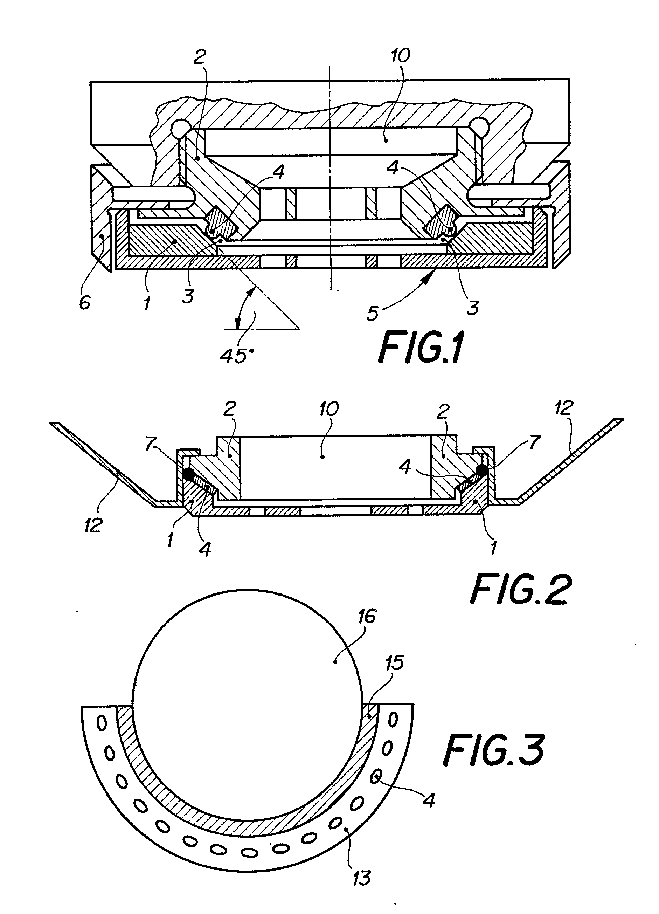

Le contour d'une tête d'usinage supérieure pour machine d'électroérosion à fil est esquissé à la figure 1. Seule l'extrémité du système d'injection est représentée. Les éléments en sont bien connus dans l'état de la technique : la chambre 10 pour le liquide d'usinage, le boîtier et le support de la buse d'injection conique. Pour les besoins de l'invention, celui-ci a été scindé en deux éléments 1 et 2. Ceux-ci délimitent un espace 3 entre deux surfaces tronconiques. Sur la figure 1, ces surfaces font un angle de 45°C avec la verticale, mais il est possible de choisir d'autres valeurs pour cet angle. C'est dans cet espace qu'est monté le capteur ou détecteur 4 du dispositif de l'invention. Il s'agit dans cet exemple d'un tube disposé en anneau, constitué par des conducteurs noyés dans une masse élastique isolante et montés dans un circuit de détection, commercialisés sous l'appellation CORD SWITCH par BRIDGESTONE. Lorsque cet anneau est comprimé, les conducteurs se mettent en contact et laissent passer un signal électrique. Toute sollicitation contre n'importe lequel des points de la pièce 5 ou du bord 6 du boîtier provoque un mouvement de la pièce 1 vers la pièce 2 et donc la compression du capteur 4, et ceci que la direction de ce mouvement soit verticale, horizontale ou oblique. Pour que la buse ne puisse faire office d'électrode et être accidentellement usinée par le fil, elle est en général réalisée dans une matière isolante, telles les matières plastiques, par exemple en DELRIN.

De nombreuses variantes sont possibles pour le détecteur 4, en particulier tous les organes émettant un signal électrique lorsqu'ils sont comprimés. Au lieu d'utiliser un détecteur en forme d'anneau on peut concevoir une série de détecteurs sphériques disposés en couronne, par exemple. Les éléments conducteurs du dispositif sont de préférence entourés de matières isolantes et étanches.

Il peut s'agir comme dans cet exemple, d'un volume de section sphérique réalisé dans une matière déformable par pression et contenant des éléments conducteurs entrant en contact lorsque cet organe sensible à la pression est déformé sous l'effet d'une pression d'intensité donnée.

Ce détecteur peut également être constitué par un tuyau creux éventuellement replié en forme d'anneau, contenant un fluide. Le fluide peut circuler dans l'anneau, et la variation de son débit ou de sa pression lorsque l'anneau est soumis à une contrainte, détectée par un capteur hydraulique placé sur son parcours. Il peut aussi s'agir d'un certain volume de fluide enclos dans un anneau fermé, comprimé lorsque l'anneau est soumis à une contrainte et dont la variation de pression sera détectée par un capteur approprié. La matière souple entourant les éléments conducteurs ou le fluide est, de préférence, élastique.

Le tube de ces détecteurs pneumatiques ou hydrauliques n'est pas forcément cylindrique, car la variation de pression hydraulique ou pneumatique se transmet uniformément à travers le détecteur, quel que soit le profil du tube.

Selon une variante, le tube à circulation de fluide peut être relié à un indicateur de niveau, par exemple un tube capillaire disposé verticalement, portant éventuellement des graduations, et pouvant être étalonné de manière à n'indiquer que les variations de niveau correspondant à des pressions supérieures à une intensité donnée. Ces variations de niveaux sont dues à un rétrécissement local du tube suite à une collision ou à une sollicitation anormale exercée sur la tête.

Signalons que l'utilisation de micro-interrupteurs ne semble pas très recommandée, car ils résistent mal à l'immersion et sont influencés par la différence de potentiel établie entre les deux électrodes et qui se transmet à travers le liquide d'usinage lorsque ce dernier est de l'eau.

Ce détecteur 4 peut donc être facilement adapté aux supports des buses d'injection montées sur les têtes d'usinage des machines actuelles, en conservant pratiquement la hauteur originale de la tête et donc le mode de fonctionnement, en particulier les divers réglages et logiciels déjà mis au point. Ainsi, le dispositif illustré à la figure 1 introduit une augmentation de la hauteur de la tête de quelques millimètres seulement. Le montage est très aisé : il suffit d'emboiter et de visser diverses rondelles dont l'une porte le détecteur 4. Il sera donc facile de remplacer un détecteur défectueux. L'encombrement de ce dispositif est pratiquement nul. Il fonctionne de façon satisfaisante même lorsqu'il est immergé dans un liquide d'usinage constitué par de l'eau de conductivité comprise entre 5 et 1000 $\mu$s, chargée de fines particules métalliques. Il reste insensible aux forces de pression inférieures à 0,1 kg. Son temps de réponse est très court; il est dans la plupart des cas de l'ordre du millième de seconde.

Le dispositif de la figure 1 peut être complété par une pièce en forme de bouclier, comme illustré à la figure 2. Les éléments et organes déjà montrés à la figure 1 sont désignés à la figure 2 par les mêmes chiffres de références. La pièce 12 en forme de bouclier est profilée et montée de manière que toute contrainte exercée en l'un de ses points se transmette à la pièce 1 et l'actionne vers la pièce 2 en comprimant le détecteur 4 et le joint 7.

Grâce à l'élasticité du joint de la charnière 7, constitué ici par un joint O-ring, les pièces 1 et 12 sont rappelées dans leur position de départ une fois que la sollicitation qui les avait poussées vers la pièce 2 a disparu. Le joint 7 à une deuxième fonction : en rendant possible une surcourse, il permet au dispositif de fonctionner avec une certaine sécurité, car le temps nécessaire à son écrasement donne à la machine le temps de réagir au signal émis par le capteur et d'empêcher la pièce 1 de venir percuter la pièce 2.

Une autre des nombreuses variantes du dispositif selon la présente invention est représentée à la figure 3. On y reconnait une pièce tampon 13 en forme de bouclier disposée autour de la tête d'usinage 16. Le détecteur de choc ou de pression anormale 4 est cette fois monté directement sur le tampon 13 et s'étend sur toute la surface de ce dernier. Il s'agit dans ce mode de réalisation d'un fin réseau d'éléments conducteurs, sensibles à la pression, du type par exemple des tapis de contact commercialisés sous le nom de REGLOMAT par la société du même nom. On peut aussi utiliser avantageusement comme capteur une feuille-contact en plastique déformable par pression, séparée d'une feuille-circuit par une grille intercalaire isolante, la feuille-circuit et la feuille-contact étant enduites d'une encre conductrice, tels les claviers souples et étanches, supportant des variations de températures de 30°C à 130°C, commercialisés sous l'appelation PIM SENSOR par PLAQUETTES INDUSTRIES. Une détection efficace peut aussi être obtenue grâce à un ruban, un tube, un fil, sensible à la pression (capsules déformables, fibres optiques, tubes déformables et élastiques remplis d'un fluide) CORD SWITCH, etc..) disposé de manière quelconque sur l'une des faces du tampon 13, ou noyé dans sa masse.

Ce capteur est placé dans une enceinte isolante électriquement et étanche, qui peut être formée du tampon 13 et de l'enclume 15. Ce capteur peut être aussi "noyé" dans le matériau constituant le tampon 13. Ce matériau doit être déformable pour que la sollicitation se transmette au détecteur 4. Il est de préférence élastique. La pièce 15 est réalisée dans un matériau rigide et joue ainsi le rôle d'enclume sur laquelle vient s'écraser ou se déformer le détecteur 4. Les résistances à la pression de ces différents matériaux sont prévues de préférence de manière à ménager une surcourse, le tampon 13 continuant à s'écraser contre l'enclume 15 alors que le capteur 4 a déjà émis un signal, une certaine épaisseur du matériau constituant le tampon 13 pouvant être interposé entre les éléments 15 et 4.

Les dispositifs de protection selon la présente invention offrent de multiples avantages. Comme mentionné ci-dessus, ils protègent les têtes d'usinage des chocs quelques soient leur direction et leur point d'impact; ils ne nécessitent pas de modifications importantes de la construction de la tête.

Ils permettent de ne maintenir qu'une faible distance entre la tête d'usinage et la surface de la pièce à découper, ce qui augmente l'efficacité de l'injection et rend possible l'usinage à grande vitesse.

Comme ils ne sont sensibles qu'à des sollicitations d'intensité supérieures à une limite donnée, ils n'interrompent pas l'usinage dans le cas de chocs relativement faibles. Ainsi, une tête d'usinage même protégée selon l'invention, peut suivre les faibles irrégularités de la pièce ou enjamber un obstacle si elle est munie d'une buse basculable telle que celle décrite dans la demande EP 271.439, sans que l'usinage ne soit inutilement interrompu.

On peut ainsi simplifier la programmation des mouvements de la tête d'usinage ainsi protégée, ainsi que les réglages, en particulier celui de la hauteur de la tête d'usinage en fonction de la variation de l'épaisseur de la pièce à usiner.

Le dispositif de protection selon la présente invention a été surtout décrit en relation avec les têtes d'usinage d'une machine d'électroérosion à fil. Toutefois, il peut être utilisé aussi sur les têtes d'usinage d'autres types de machines-outil, en remplacement par exemple des micro-interrupteurs utilisés dans certains des dispositifs anti-collision ou de positionnement.

**Revendications**

1. Dispositif de protection pour têtes d'usinages permettant de déceler un choc ou une sollicitation anormale sur l'extrémité de la tête d'usinage et d'interrompre le mouvement relatif entre cette tête et l'obstacle, comportant un capteur (4) monté sur un organe placé à l'extrémité (5, 6) de cette tête et agencé pour détecter l'application sur cette extrémité (5, 6) d'une force de pression d'intensité supérieure à une valeur de référence prédéterminée, quelque soit l'orientation de cette force et son point d'application, et pour envoyer un signal aux commandes de la machine afin d'interrompre le mouvement relatif entre cette tête et l'obstacle et afin de ramener l'intensité de la force de pression en dessous de cette valeur de référence ou même de supprimer cette force.

2. Dispositif selon la revendication 1, dans lequel le capteur (4) comporte un organe sensible à la pression.

3. Dispositif selon la revendication 2, comportant aussi un élément tampon (12,13) profilé de façon appropriée afin d'exercer une pression sur le capteur lorsqu'il est sollicité vers ce dernier par une force horizontale, verticale ou oblique de n'importe quelle direction.

4. Dispositif selon la revendication 2, dans lequel le capteur comporte un organe se déformant sous l'action d'une pression d'intensité supérieure à une limite donnée.

5. Dispositif selon la revendication 2, contenant des éléments conducteurs entrant en contact lorsque l'organe est déformé sous l'action d'une pression d'intensité supérieure à une limite donnée.

6. Dispositif selon la revendication 2, comportant aussi un capteur hydraulique ou pneumatique, et dans lequel le capteur sensible à la pression est un tube creux et déformable contenant un fluide, le capteur hydraulique ou pneumatique étant agencé pour détecter une variation de pression de ce fluide.

7. Dispositif selon la revendication 2, comportant aussi un capteur hydraulique ou pneumatique, et dans lequel le capteur sensible à la pression est un tube creux et déformable dans lequel circule un fluide, le capteur hydraulique ou pneumatique étant agencé pour détecter une variation de débit ou de pression hydraulique de ce fluide.

8. Dispositif selon la revendication 1, dans lequel le capteur est agencé pour émettre un signal actionnant un avertisseur sonore ou optique ou faisant apparaître un message d'erreur sur un écran relié à la commande numérique de la machine EDM.

9. Dispositif selon l'une des revendications 6 ou 7, dans lequel le tube creux parcouru par le fluide est relié à un organe agencé pour présenter une variation du niveau de ce fluide lorsque la pression de ce dernier varie.

10. Dispositif selon la revendication 1, dans lequel le capteur est agencé pour émettre un signal actionnant l'arrêt du mouvement relatif entre la tête et l'obstacle avant que l'un de ces éléments ne vienne percuter l'organe placé à l'extrémité de la tête.

11. Dispositif selon la revendication 1, dans lequel l'organe placé à l'extrémité de cette tête est le boitier supportant la buse d'injection de liquide d'usinage.

12. Dispositif selon la revendication 11, dans lequel le capteur est un anneau sensible à la pression placé dans un espace ménagé entre deux éléments du boitier coaxiaux et présentant une surface oblique et tronconique.

FIG.1

45°

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN<br>vol. 10, no. 295 (M-523)(2351) 07 octobre 1986,<br>& JP-A-61 109615 (INOUE JAPAX RES INC) 28 mai 1986,<br>* le document en entier *<br>----- | 1 | B23H7/10<br>B23H7/26<br>B23Q5/58 |

|  |  |  | DOMAINES TECHNIQUES RECHERCHES (Int. Cl.5 ) |
|---|---|---|---|
|  |  |  | B23H<br>B23Q |

Le présent rapport a été établi pour toutes les revendications

| Lieu de la recherche | Date d'achèvement de la recherche | Examinateur |
|---|---|---|
| LA HAYE | 02 MAI 1990 | DAILLOUX C. |